# EUROPÄISCHE PATENTSCHRIFT

(11) **EP 0 861 580 B1**
(45) Veröffentlichungstag und Bekanntmachung des Hinweises auf die Patenterteilung: **15.12.2004**
(21) Anmeldenummer: 98103189.1
(22) Anmeldetag: 24.02.1998
(51) Int. Cl.: A01D 34/52

(54) **Mähgerät**
Mowing apparatus
Appareil à faucher

(30) Priorität: 27.02.1997 DE 29703498 U
(43) Veröffentlichungstag der Anmeldung: 02.09.1998
(73) Patentinhaber: Gerhard Dücker GmbH & Co. KG Landmaschinenfabrik, 48703 Stadtlohn (DE)
(72) Erfinder: Dücker, Gerhard, 48703 Stadtlohn (DE)
(74) Vertreter: Busse & Busse Patentanwälte

(56) Entgegenhaltungen:
- WO-A-84/00465
- US-A- 3 514 934
- US-A- 5 027 592

## Beschreibung

Die Erfindung bezieht sich auf ein Mähgerät nach dem Oberbegriff des Anspruches 1.

Die US-A-3514934 offenbart ein Mähgerät mit einer Walze, die an ihrem Umfang mit schräg zur Drehachse der Walze angeordneten Tragkörpern versehen ist, die jeweils an zwei sich gegenüberliegenden Endbereichen der Tragkörper ein Schneidstück aufweisen. Bei einer vollständigen Umdrehung der Walze wird das unterhalb der Walze befindliche Schneidgut nur in weniger als der Hälfte der durchlaufenden Umdrehungspositionen von den Schneidstücken der Tragkörper erfaßt. Um dennoch ein kontinuierliches Schneidergebnis während einer Vorwärtsbewegung des Mähgerätes zu erzielen, ist eine sehr hohe Rotationsgeschwindigkeit der Walze, die mit einer entsprechenden Materialbeanspruchung einhergeht, erforderlich.

Die WO-A-84/00465 offenbart eine rotierbare Walze, die an ihrem Umfang mit schräg zur Drehachse angeordneten Scheiben versehen ist. In einer Ausgestaltung der Vorrichtung als Mähgerät wird Gras mit Hilfe der Scheiben an einen Messerbalken gedrückt und von dem Messerbalken geschnitten. In einer weiteren Ausgestaltung der Walze zur Bearbeitung von festem Untergrund sind an der Scheibe zwei Spitzhackenelemente befestigt, die jedoch nicht zum Mähen geeignet sind.

Die EP 0 328 080 A2 offenbart ein Mähgerät, bei dem die Schneidelemente mit einem Schneidband versehen sind, das als Streifen einseitig auf den Schneidelementen angeordnet ist. Über Teilbereiche der Rotationsbewegung der Walze kommt das Schneidband jedoch nicht zum Einsatz im Sinne eines schneidenden Kontaktes mit den abzumähenden Halmen, da während dieser Bewegungsphase die das Schneidband tragenden Schneidelemente selbst in Kontakt mit den Halmen stehen, nicht jedoch das Schneidband, so daß das Schneidergebnis insgesamt nur bei einer hohen Rotationsgeschwindigkeit der Walze, die mit einer entsprechenden Materialbeanspruchung einhergeht, zufriedenstellend ausfallen kann.

Der Erfindung liegt das Problem zugrunde, ein Mähgerät der eingangs genannten Art dahingehend zu verbessern, daß es eine hohe Schneidleistung bei gleichzeitig mechanischer Unempfindlichkeit und Einfachheit der Wartung gewährleistet.

Die Erfindung löst dieses Problem mit den Merkmalen des Anspruchs 1. Hinsichtlich weiterer vorteilhafter Ausgestaltungen wird auf die Ansprüche 2 bis 14 verwiesen.

Die Schneidstücke erstrecken sich jeweils über den gesamten Umfang der Tragkörper. Hierdurch ist sichergestellt, daß während der gesamten Umdrehung der Tragkörper um die Drehachse der Walze ein Schneidvorgang von Schnittgut durch die Schneidstücke stattfindet. Somit kann gegenüber herkömmlichen Mähgeräten entweder die Rotationsgeschwindigkeit der Walze bei gleicher Schneidleistung reduziert werden oder die Schneidleistung ist gegebenüber diesen bei gleicher Rotationsgeschwindigkeit verbessert.

Zudem sind die vorderseitig und rückseitig angebrachten Schneidstücke gegeneinander in einem Höhenversatz bezüglich der Tragkörper angeordnet. Somit kann die Projektion der Außenkante der Schneidstücke in Richtung parallel zur Drehachse während des Betriebes eine Kreisbahn beschreiben, was für eine gleichmäßige Kürzung des Schnittgutes unerläßlich ist. Außerdem ist das Mähergebnis auch an der Übergangsstelle zwischen den vorderseitig und rückseitig an einem Tragkörper an gebrachten Schneidkörpern gleichmässig, weil durch den Höhenversatz und die Schrägstellung der Tragkörper an der Walze die Außenkante der vorder- und rück seitigen Schneidstücke eines Tragkörpers parallel zur Drehachse der Walze und unmittelbar hintereinander liegen. Auch wird durch den Höhenversatz die Schnittbreite jedes Tragkörpers mit daran angeordneten Schneidstücken gegenüber herkömmlichen Mähgeräten verbreitert, was ebenfalls zu einem verbesserten Schnittergebnis führt.

Wenn die Tragkörper als einstückige und zumindest bereichsweise elliptische Umfangsgestalt aufweisende Ringscheibenkörper nach Art von Taumelscheiben ausgebildet sind, die die Drehachse der Walze umgreifen und gegenüber dieser in einer Schrägstellung stehen, so lassen sich diese Tragkörper besonders kostengünstig herstellen und einfach auf der Drehwalze montieren. An einem solchen einstückigen Tragkörper sind vorzugsweise zwei Schneidstücke jeweils angeordnet, so daß der Montageaufwand zum Wechseln der Schneidstücke, die als Verschleißteile dienen, gering gehalten ist.

Um den gewünschten Höhenversatz der Schneidstücke an dem jeweiligen Tragkörper realisieren zu können, müssen diese entlang der großen Halbachse der Ellipse derart gegeneinander versetzt werden, daß ein an einem in spitzem Winkel zur Drehachse stehenden Flächensektor angeordneter Teil eines Schneidkörpers gegenüber einem an einem in stumpfem Winkel zur Drehachse stehenden Flächensektor angeordneten Schneidkörper bzw. Teil eines Schneidkörpers nach außen entlang dieser Halbachse parallel versetzt ist, wobei diese Versetzung gegeneinander so weit gehen muß, daß der Außenumfang der Schneidstücke jederzeit einen gleichen Abstand von einer parallel zur Drehachse liegenden Bodenebene aufweist, um hierdurch eine gleichmäßige Schnitthöhe zu gewährleisten.

Dazu können beispielsweise die Tragkörper mit Langlöchern versehen sein, wobei Befestigungsmittel, die die Schneidstücke und den Tragkörper durchgreifen, entlang dieser Langlöcher justiert werden können. Einfacher zu handhaben und dadurch für die Wartung sehr viel günstiger ist es, wenn die Tragkörper derart ausgebildet sind, daß die Schneidstücke nur in definierter Lage zum Tragkörper montiert werden können. Dieses wird erreicht, indem der Tragkörper zwei gleichartige halbelliptische Ringsegmente ausbildet, deren Außenumriß einen Parallelversatz entsprechend dem Höhenversatz der Schneidkörper aufweist. Diese Ringsegmente können dann über ihren Umfang verteilt Bohrungen aufweisen, die exakt mit dem Maß der Bohrungen der Schneidkörper übereinstimmen und ohne Justage den gewünschten Höhenversatz der Schneidkörper an den Tragkörpern einzustellen gestatten. Die Anordnung der Bohrungen in den Ringsegmenten folgt dazu dem Versatz der Halbellipsen gegeneinander.

Aufgrund der Überlappung der Tragkörper in Richtung quer zur Walzenachse ist damit insgesamt erreicht, daß jeder Bereich des Schnittguts von mehreren Schneidstücken erreicht wird, so daß ein doppelter Schnitt von beiden Seiten erfolgt. Durch die Ausbildung der Tragkörper und die Anordnung der Befestigungselemente ist der Aufwand zum Auswechseln der als Verschleißteile ausgebildeten Schneidstücke sehr gering.

Weitere Vorteile und Einzelheiten ergeben sich aus der nachfolgenden Beschreibung eines Ausführungsbeispiels des Gegenstandes der Erfindung und der Zeichnung.

In der Zeichnung zeigen:

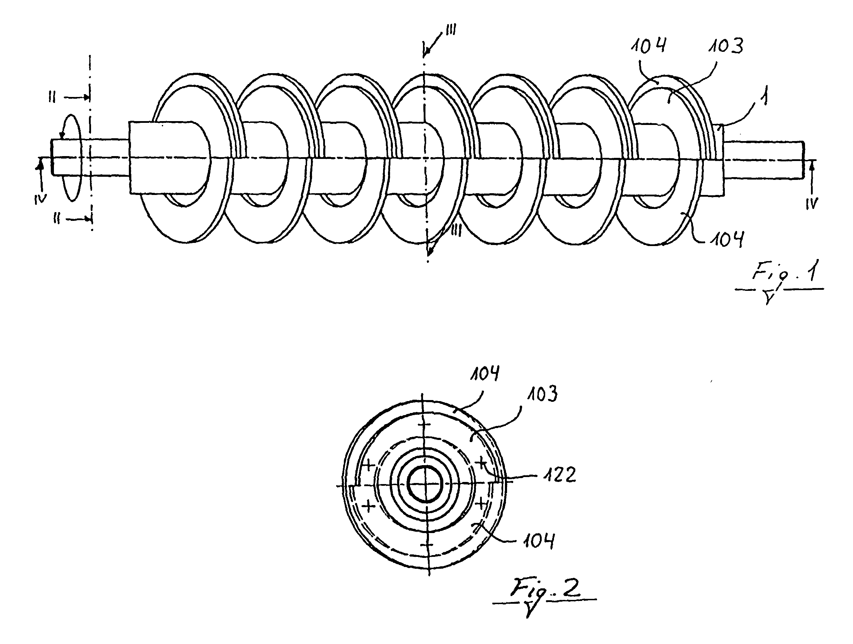

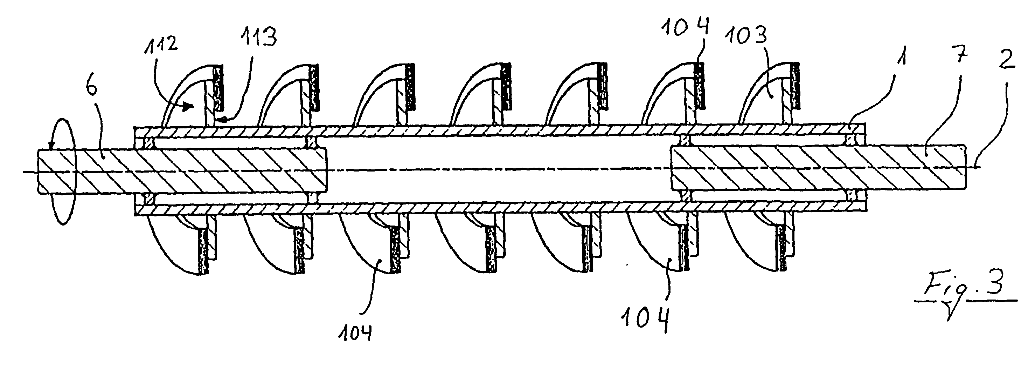

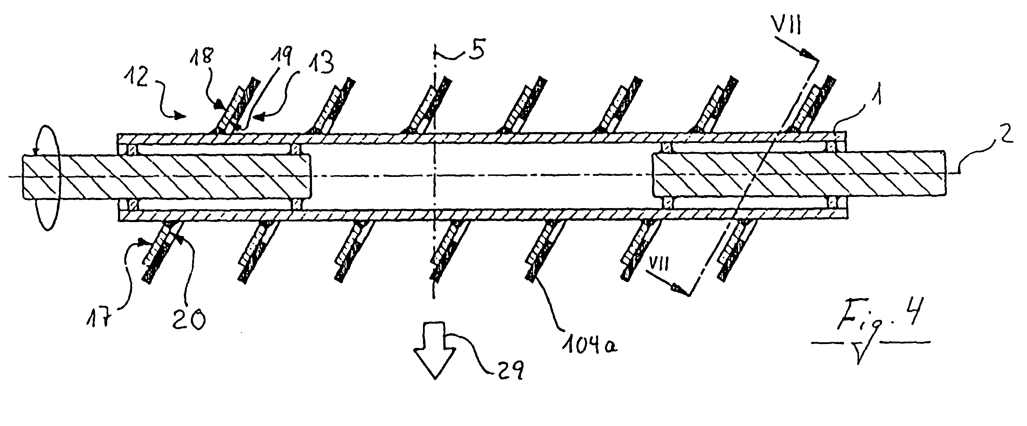

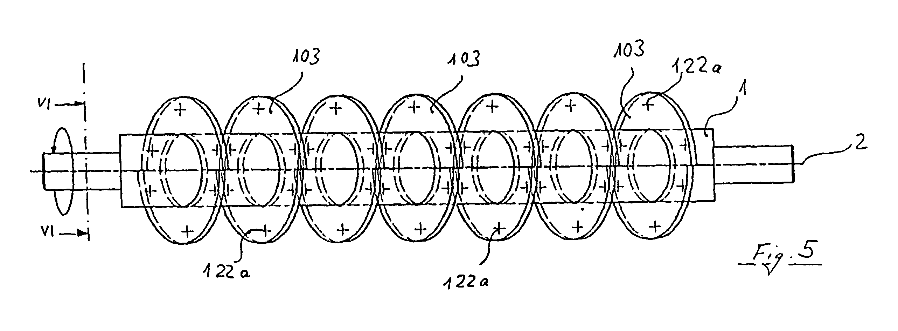

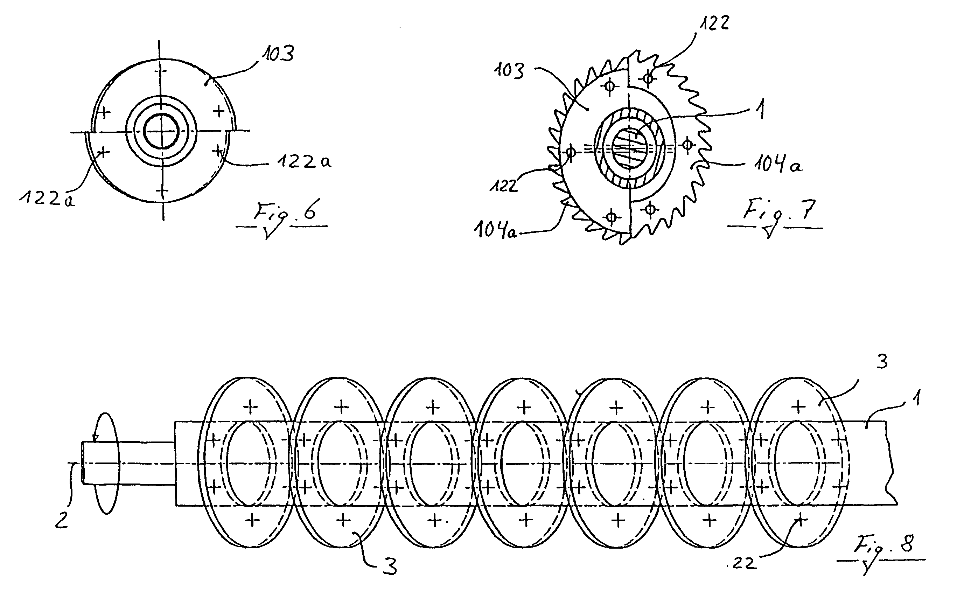

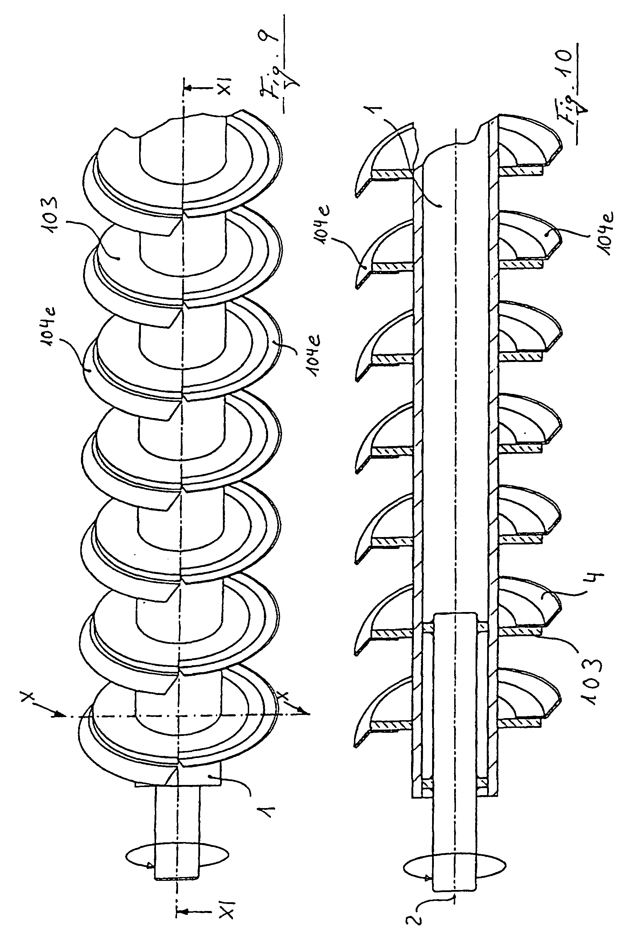

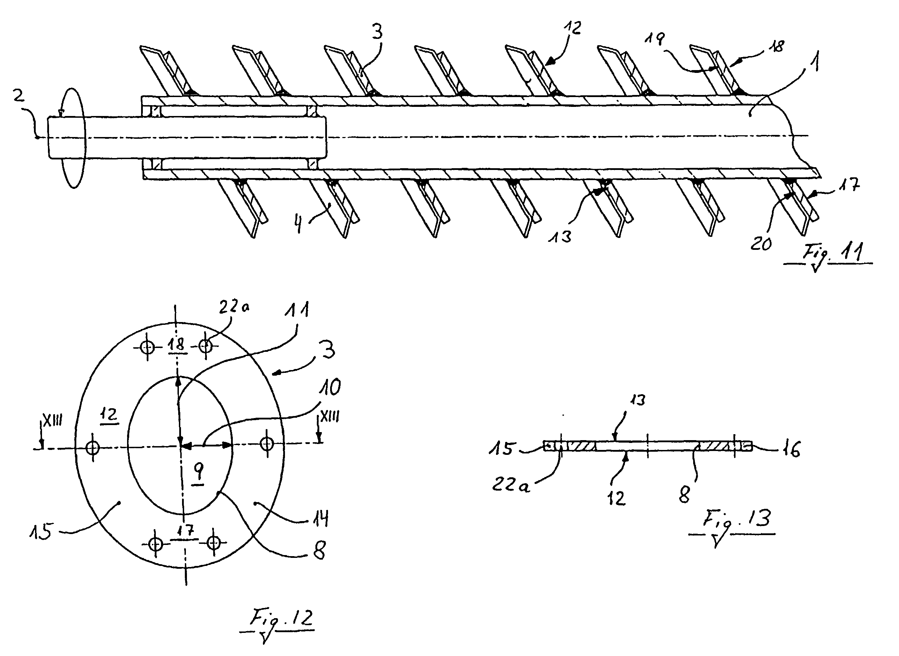

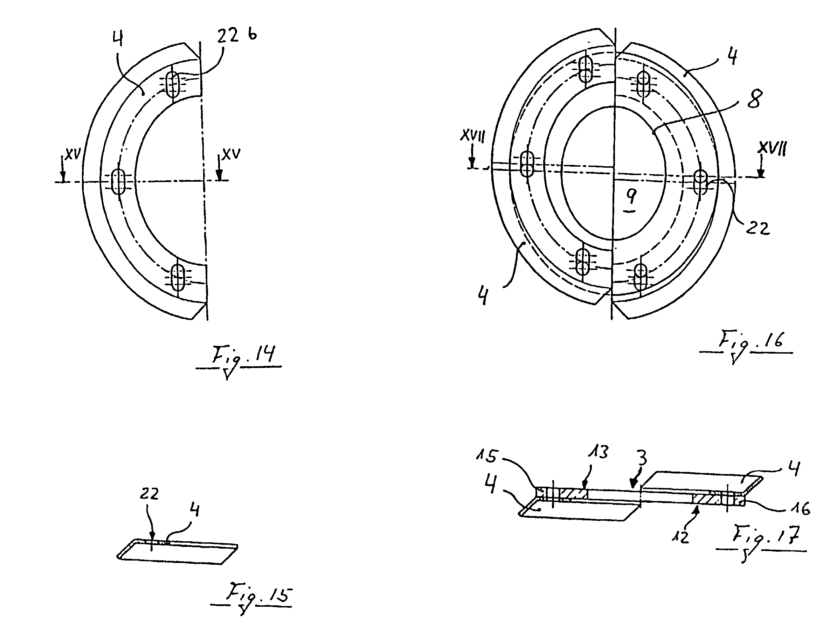

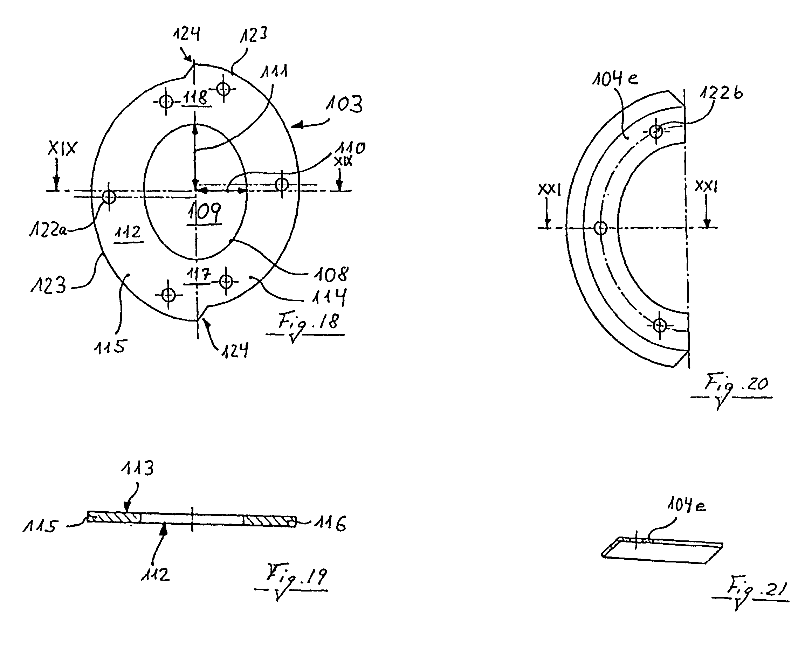

- Fig. 1: eine Draufsicht auf eine mit Tragkörpern und Schneidstücken versehene Walze,

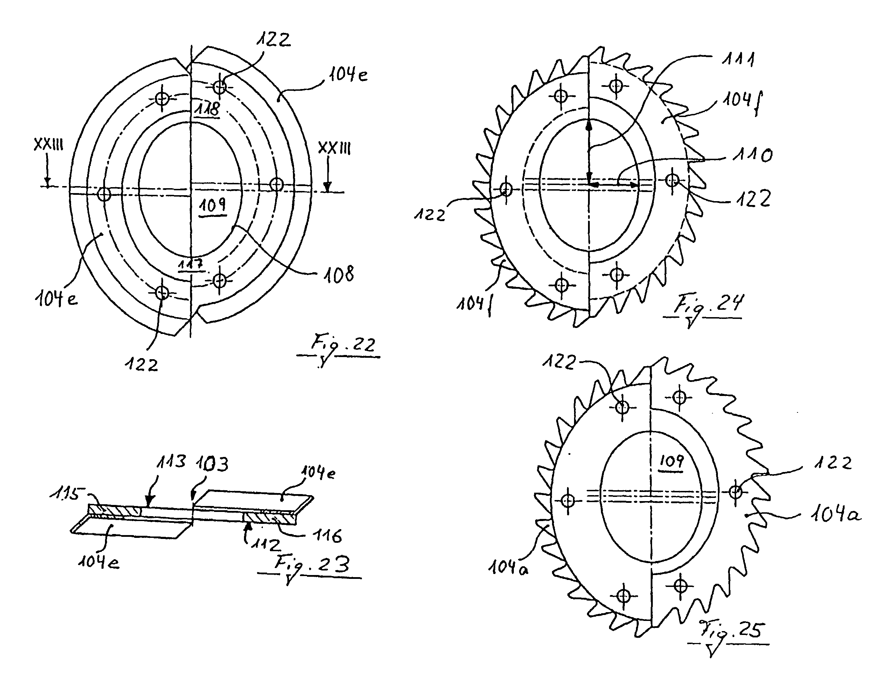

- Fig. 2: eine Projektion entlang der Linie II-II in Fig. 1,
- Fig. 3: einen Schnitt entlang der Linie III-III in Fig. 1,
- Fig. 4: einen Schnitt entlang der Linie IV-IV in Fig. 1,
- Fig. 5: eine ähnliche Ansicht zu Fig. 1 mit eingezeichneten Bohrungen und ohne montierte Schneidstücke,
- Fig. 6: einen Schnitt entlang der Linie VI-VI in Fig. 5,
- Fig. 7: einen Schnitt entlang der Linie VII-VII in Fig. 4 unter Ergänzung der in Fig. 4 abgeschnittenen Hälfte des Rotationskörpers,
- Fig. 8: eine ähnliche Ansicht zu Fig. 5 mit ellipsenringförmigen Tragkörpern,
- Fig. 9: eine ähnliche Ansicht zu Fig. 8 mit einen Höhenversatz aufweisenden Tragkörpern und anmontierten Schneidstücken,
- Fig. 10: einen Schnitt entlang der Linie X-X in Fig. 9,
- Fig. 11: einen Schnitt entlang der Linie XI-XI in Fig. 9,
- Fig. 12: einen ellipsenringförmigen Tragkörper in Draufsicht,
- Fig. 13: einen Schnitt entlang der Linie XIII-XIII in Fig. 12,
- Fig. 14: ein Schneidstück mit abgewinkeltem glattem Messer in Draufsicht,
- Fig. 15: einen Schnitt entlang der Linie XV-XV in Fig. 14,
- Fig. 16: den Tragkörper nach Fig. 12 mit anmontierten Schneidstücken nach Fig. 14 in Draufsicht,
- Fig. 17: einen Schnitt entlang der Linie XVII-XVII in Fig. 16,
- Fig. 18: einen Tragkörper mit höhenversetzter Außenumrißgestalt in Draufsicht,
- Fig. 19: einen Schnitt entlang der Linie XIX-XIX in Fig. 18,
- Fig. 20: ein Schneidstück mit abgewinkeltem Messer zur Anmontage an den Tragkörper nach Fig. 18,
- Fig. 21: einen Schnitt entlang der Linie XXI-XXI in Fig. 20,
- Fig. 22: den Tragkörper nach Fig. 18 mit montierten Schneidstücken nach Fig. 20 in Draufsicht,
- Fig. 23: einen Schnitt entlang der Linie XXIII-XXIII in Fig. 22,
- Fig. 24: eine ähnliche Ansicht zu Fig. 22 mit montierten abgewinkelten Sägezahnmessern als Schneidstücken,
- Fig. 25: eine ähnliche Ansicht zu Fig. 24 mit im Querschnitt glattflächigen Sägezahnschneidstücken,
- Fig. 26 bis Fig. 31: verschiedene Ausbildungen von glattflächigen Schneidstücken mit Rundbohrungen zur Aufnahme der Befestigungselemente,
- Fig. 32 bis Fig. 35: verschiedene Ausbildungen von Schneidstücken mit abgewinkelten Randbereichen und Langlöchern zur Anmontage an die Tragkörper jeweils in Draufsicht und in Querschnittsdarstellung,
- Fig. 36: eine schematische Seitenansicht des Mähgerätes mit einer verstellbaren Gegenschneide,
- Fig. 37: eine alternative Ausbildung des Mähgerätes mit einer verstellbaren Zerkleinerungsleiste.

Im einzelnen weist das Mähgerät eine oder mehrere Walzen 1 auf, die um eine Drehachse 2 während des Betriebes des Mähgeräts rotieren, wobei außenseitig auf der Walze 1 Tragkörper 3,103 angeordnet sind, die ihrerseits in ihrem der Walze 1 abgewandten Außenbereich mit Schneidstücken 4,4a,4b,4c,104, 104a,104b,104c,104d,104e,104f versehen sind.

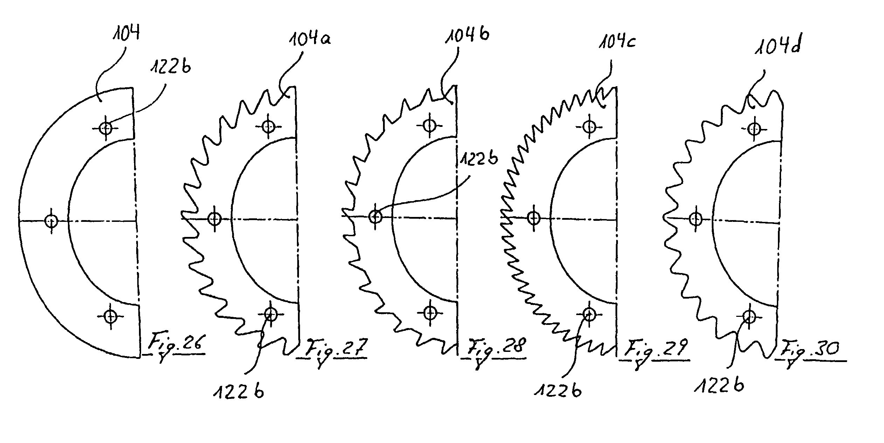

Die Tragkörper 3 sind schräg zur Walze 1 und parallel hintereinander gestaffelt angeordnet (Fig. 4), wobei die Staffelung derart ausgebildet ist, daß sich entlang einer senkrecht zur Drehachse gedachten Linie 5 eine Überlappung der Randbereiche verschiedener Tragkörper ergibt, so daß während der Rotation der Walze 1 um die Drehachse 2 der Außenumriß der Gesamtheit der Tragkörper 3 eine geschlossene zylindrische Mantelfläche beschreibt, die die Längsachse 2 der Walze 1 ohne Unterbrechung umschließt.

Die Walze 1 ist entweder in ihren Außenbereichen über Achsteile 6 und 7 gelagert und antreibbar, oder die Walze 1 kann mehrere Teilabschnitte aufweisen, die jeweils durch Lagerstellen voneinander abgetrennt sind. Auch ist die Anzahl der Walzen 1 variabel.

Die Tragkörper 3,103 können als einzelne, beispielsweise steg- oder keilförmig ausgebildete Halteelemente ausgebildet sein, die über den Umfang der Walze 1 einzeln angeschweißt sind und jeweils die Schneidstücke 4,4a,4b,4c, 104, 104a, 104b, 104c, 104d, 104e, 104f tragen. Günstiger ist es jedoch, die jeweiligen Tragkörper 3,103 einstückig auszubilden, wobei der Innenumriß 8,108 der Tragkörper 3,103 eine ellipsenförmige Formausnehmung 9,109 beläßt, deren kleine Halbachse 10,110 dem Radius der Walze 1 entspricht und deren große Halbachse 11,111 diesem gegenüber derart vergrößert ist, daß nach Aufschieben der Tragkörper 3,103 auf die Walze 1 durch Anlage des gesamten Innenumfangs 8,108 an den Außenumfang der Walze 1 die gewünschte Schrägstellung der Tragkörper 3,103 automatisch gesichert ist und die Tragkörper 3,103 in dieser so erreichten Schrägstellung mit der Walze 1 verbunden, insbesondere verschweißt werden können. Hierdurch ist der Montageaufwand für die Anbringung der Tragkörper 3,103 an der Walze 1 sehr gering. Durch die Schrägstellung der Tragkörper 3,103 gegenüber der Drehachse 2 der Walze 1 sowie durch geeignete Anbringung der Schneidstücke 4,4a,4b,4c,104,104a,104b,104c,104d,104e,104f an den Tragkörpern 3,103, wie weiter unten eingehend dargestellt, ist sichergestellt, daß die Projektion der Außenkante der Schneidstücke 4,4a,4b,4c,104,104a,104b, 104c,104d,104e,104f in der Richtung parallel zur Drehachse 2 der Walze 1 eine Kreisbahn beschreibt, so daß eine gleichmäßige Schnitthöhe bzw. Fräshöhe an der bearbeiteten Fläche entsteht.

An den jeweiligen Tragkörpern 3,103 sind sowohl an der Vorderseite 12,112 als auch an der Rückseite 13,113 Schneidstücke 4,4a,4b,4c,104,104a,104b, 104c,104d,104e,104f angeordnet. Diese Schneidstücke 4,104 befinden sich in einem Höhenversatz gegeneinander (sh. z. B. Fig. 16, Fig. 22) und erstrecken sich jeweils über Teilsegmente 14,15,114,115 der Außenbereiche der Tragkörper 3,103.

Im vorliegenden Ausführungsbeispiel sind die Teilsegmente 14,15 bzw. 114,115 als zwei zueinander symmetrische Teile eines Ringscheibenkörpers 3,103 ausgebildet. Jedes der Teilsegmente 14,15,114,115 ist mit einem Schneidstück 4,4a,4b,4c,104,104a,104b,104c,104d,104e,104f bestückt, so daß an jedem Tragkörper 3,103 zwei Schneidstücke 4,4a,4b,4c,104,104a, 104b,104c,104d,104e,104f angeordnet sind. Diese Anzahl von zwei Schneidstücken 4,4a,4b,4c,104,104a,104b,104c,104d,104e,104f pro Tragkörper 3,103 stellt eine Minimalanzahl für die Erfindung dar, eine höhere Anzahl von Schneidstücken 4,4a,4b,4c,104,104a,104b,104c,104d,104e,104f ist möglich. Mit Erhöhung der Anzahl der Schneidstücke 4,4a,4b,4c,104,104a,104b,104c, 104d,104e,104f pro Tragkörper 3,103 geht jedoch auch ein erhöhter Montageaufwand beim Auswechseln der Schneidkörper 4,4a,4b,4c,104,104a,104b, 104c,104d, 104e, 104f einher, so daß eine möglichst geringe Zahl von Schneidkörpern 4,4a,4b,4c,104,104a,104b,104c1 04d, 104e, 104f pro Tragkörper 3,103 aus dieser Sicht anzustreben ist.

Der Tragkörper 3,103 weist auf seiner Vorderseite 12,112 in spitzem Winkel zur Drehachse stehende Flächensektoren 17,117 und in stumpfem Winkel zur Drehachse stehende Flächensektoren 18,118 auf; ebenso weist der als Ringscheibenkörper ausgebildete Tragkörper 3,103 auf seiner Rückseite 113 spitzwinklig zur Drehachse stehende Flächensektoren 119 und stumpfwinklig zur Drehachse stehende Flächensektoren 120 auf. Der Höhenversatz zwischen den einem Tragkörper 3,103 zugeordneten Schneidstücken 4,4a,4b,4c,104,104a, 104b,104c,104d,104e,104f ist dadurch erreicht, daß Schneidstücke 4,4a,4b,4c, 104,104a,104b,104c,104d,104e,104f bzw. Teile von Schneidstücken 4,4a,4b, 4c,104,104a,104b,104c,104d,104e,104f, die an spitzwinklig zur Drehachse 2 stehenden Flächensektoren 17,117 der Vorderseite 12,112 bzw. 19,119 der Rückseite 13,113 der Tragkörper 3,103 angeordnet sind, entlang der großen Halbachse der Ellipse, die von dem Tragkörper 3,103 gebildet ist, nach außen verschoben sind gegenüber Schneidstücken 4,4a,4b,4c,104,104a,104b,104c, 104d,104e,104f bzw. deren Teilen, die sich über stumpfwinklige Flächensektoren 18,118 der Vorderseite 12,112 bzw. 20,220 der Rückseite 13,113 der Tragkörper 3,103 erstrecken.

Wenn sich Schneidstücke jeweils nur über einen dieser spitzwinkligen Flächensektoren 17,19 bzw. 117,119 erstrecken, sind diese Schneidstücke insgesamt nach außen versetzt. In den gezeichneten Ausführungsbeispielen erstrecken sich die Schneidstücke 4,4a,4b,4c,104,104a,104b,104c,104d, 104e,104f jeweils sowohl über spitzwinklige 17,19 bzw. 117,119 als auch über stumpfwinklige Flächensektoren 18,20 bzw. 118,120. Daher bedeutet hier das Vesetzen eines sich über einen stumpfwinkligen Flächensektor 18,20;118,120 erstreckenden Teils eines Schneidstücks 4,4a,4b,4c,104,104a,104b,104c, 104d,104e,104f entlang der großen Achse der Ellipse nach außen gleichzeitig ein Einwärtsversetzen des an dem spitzwinkligen Flächensektor 17,19,117,119 anliegenden Teils desselben Schneidstücks entlang derselben Ellipsenachse.

Dieser Höhenversatz geht so weit, daß der Außenumfang der Schneidstücke 4,4a,4b,4c,104,104a,104b,104c,104d,104e,104f jederzeit einen gleichen Abstand zu einer parallel zur Drehachse 2 liegendenden Bodenebene 21 aufweist. Auch im Bereich der Trennungsfuge zwischen den Schneidstücken 4,4a,4b,4c,104,104a,104b,104c,104d,104e,104f ist durch den Höhenversatz bezüglich des Tragkörpers 3,103 sowohl die Außenkante des vorderseitig als auch des rückseitig angeordneten Schneidstückes 4,4a,4b,4c, 104,104a,104b,104c,104d,104e,104f gleich weit von der Drehachse 2 radial entfernt, weil der an dem spitzwinkligen Bereich 119 bzw. 117 angebrachte Schneidkörper 4 nach außen hin gegenüber dem an dem stumpfwinkligen Bereich 118 bzw. 120 angeordneten Schneidstück 4 versetzt ist. Trotz der Schräglage des Tragkörpers 3,103 läßt sich damit der gleiche Radialabstand der Schneidstücke 4,4a,4b,4c,104,104a,104b,104c,104d,104e,104f von der Drehachse 2 sicherstellen.

Diese Parallelverschiebung zur Erreichung des Höhenversatzes zwischen den vorderseitig und rückseitig angebrachten Schneidstücken 4,4a,4b,4c, 104,104a,104b,104c,104d,104e,104f läßt sich auf verschiedene Arten realisieren.
1. Die Schneidstücke 4,4a,4b,4c und/oder die Tragkörper 3 weisen Langlöcher oder andere entlang der großen Halbachse der Ellipse sich erstreckende Aufnahmen 22 für die Aufnahme von Befestigungselementen auf, mit denen die Schneidstücke 4,4a,4b,4c an den Tragkörpern 3 angeordnet sind. Dadurch läßt sich eine Relativverschiebung zwischen den Schneidstücken 4,4a,4b,4c und dem Tragkörper 3 nach Durchgriff der Befestigungsmittel, beispielsweise gekonterter Schrauben, durchführen, wobei nach Einstellung der gewünschten Relativverschiebung (Fig. 16) die Schrauben fixiert werden können. Dieses ist jedoch insofern umständlich, als einerseits die Schneidstücke 4,4a,4b,4c in der erforderlichen Lage festgehalten werden müssen und andererseits die Befestigungsmittel gleichzeitig fixiert werden müssen.
2. Eine besonders vorteilhafte Lösung ist beispielsweise den Fig. 18 bis 22 zu entnehmen. Hier ist der Tragkörper 103 derart ausgebildet, daß er im wesentlichen zwei gleiche Ringsegmente 114,115 ausbildet, die symmetrisch zueinander um den Mittelpunkt der durch die Formausnehmung 109 gebildeten Ellipse sind, deren Außenumriß 123 einen Parallelversatz 124 der beiden Ringsegmente 114,115 ausbildet. Dennoch ist der Tragkörper 103 insgesamt einstückig, wobei die innere Formausnehmung 109 einen geschlossenen elliptischen Umfang 108 ausbildet, so daß die Einfachheit der richtigen Montage des Tragkörpers 103 auf der Walze 1 von dem Höhenversatz 124 des Außenumrisses 123 unberührt bleibt. Die halbelliptischen Ringsegmente 114,115 sind dadurch gebildet, daß der Außenumfang 123 gegenüber dem Innenumfang 108 des jeweiligen Halbsegmentes jeweils einen Versatz entlang der großen Halbachse 111 der durch die Formausnehmung 109 gebildeten Ellipse 108 aufweist.
Bei einem derartig ausgebildeten Tragkörper 103 entfällt die Notwendigkeit von Langlöchern oder ähnlichen Aufnahmen, die eine Verschiebung der Schneidstücke 104,104a,104b,104c,104d,104e,104f bezüglich der Tragkörper 103 gestatten müssen. Statt dessen können sowohl die Bohrungen 122a der Tragkörper 103 als auch 122b der Schneidstücke 104,104a,104b,104c,104d,104e,104f als dem Maß des Befestigungsmittels entsprechende Rundbohrungen ausgebildet sein, wobei die Bohrungen 122a in den Ringsegmenten 114,115 dem Versatz der Halbellipsen gegeneinander folgen, so daß die vorderseitig und rückseitig anzubringenden Schneidstücke 104,104a,104b,104c,104d,104e,104f identisch ausgebildet sein können und gegeneinander auswechselbar sind (sh. Fig. 18, Fig. 20).

Im vorliegenden Ausführungsbeispiel ist an jedem Ringsegment 14,15 bzw. 114,115 jeweils ein Schneidstück 4,4a,4b,4c,104,104a,104b,104c, 104d,104e,104f angeordnet. Es ist jedoch, wie oben erwähnt, auch möglich, mehrere Schneidstücke an einem Ringsegment 14,15 bzw. 114,115 anzubringen, wobei dann die Schneidstücke entsprechend verkleinert sein müssen und sich nur über einen geringeren Teil des Umfangs erstrecken dürfen. Sowohl eine serielle Anbringung mehrerer kleinerer Schneidstücke auf einer der Seiten 12,112 bzw. 13,113 des Tragkörpers 3,103 ist dabei ermöglicht als auch ein zusätzliches Alternieren zwischen der Vorder- und Rückseite 12,13 bzw. 112,113.

Bei der besonders vorteilhaften Ausführung, daß genau zwei Schneidstücke 4,4a,4b,4c,104,104a,104b,104c,104d,104e,104f an einem Tragkörper 3,103 angeordnet sind, um hierdurch den Montageaufwand beim Wechseln der Schneidstücke 4,4a,4b,4c,104,104a,104b,104c,104d,104e,104f die als Verschleißteile dienen, zu verringern, muß die Trennungsfuge zwischen dem vorderseitigen und dem rückseitigen Schneidstück 4,4a,4b,4c bzw. 104,104a,104b,104c, 104d,104e,104f nicht im Scheitelpunkt der Ellipse liegen. Auch eine Trennung beispielsweise in Verlängerung der kleinen Halbachse 10,110 zwischen vorder- und rückseitigem Schneidstück 4,4a,4b,4c, 104,104a,104b,104c,104d,104e,104f ist möglich.

Durch die erfindungsgemäße Anordnung können die als Taumelscheiben ausgebildeten Tragkörper 3,103 während der gesamten Rotationsbewegung der Walze 1 einen Schneidvorgang ausführen, wobei durch die Überlappung der Taumelscheiben 3,103 entlang der Linie 5 jeder Bereich des abzumähenden bzw. abzufräsenden Bodens 21 zumindest zweimal von verschieden orientierten Schneidstücken 4,4a,4b,4c,104,104a,104b,104c,104d,104e,104f eines oder mehrerer Tragkörper 3,103 kontaktiert wird. Die Schneid- bzw. Fräswirkung ist dabei gegenüber herkömmlichen Anordnungen deutlich verbessert, da sich durch die alternierende Anbringung der Schneidstücke 4,4a,4b,4c, 104,104a,104b,104c,104d,104e,104f an den Tragkörpern 3,103 die Schneidwirkung der Taumelscheibe pro Umlauf erheblich vergrößert. Damit kann bei gleichbleibender Drehzahl ein erheblich verbessertes Schnittergebnis erreicht werden bzw. zur Erreichung eines gleichen Schnittergebnisses kann die Drehzahl der Walze 1 erheblich abgesenkt werden.

Bei der Bearbeitung des Bodens, die sowohl in einem schneidenden Abtragen von Halmen bestehen kann als auch in einem Abfräsen einer obersten Bodenschicht - je nach Art der Schneidstücke und Höhenabstand der Walze 1 vom Boden -, wird die Walze 1 senkrecht zu ihrer Drehachse 2 über die Bodenebene 21 gezogen. Hierzu kann hinter der Walze 1 eine Stützrolle 30 angeordnet sein, mittels der der Abstand des äußeren Randes der Schneidstücke 4,4a,4b,4c,104,104a,104b,104c,104d,104e,104f gegenüber der Bodenebene 21 einstellbar ist.

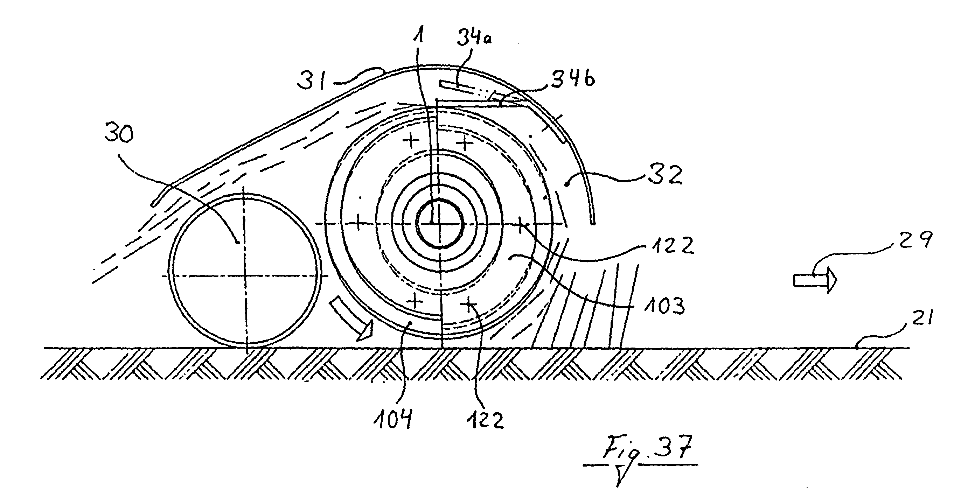

Zwischen der Walze 1 und einem sie oberseitig umgreifenden Gehäuseteil 31 befindet sich ein Eintrittsspalt 32 für das Schnittgut, wobei eine Variation der Breite dieses Eintrittsspaltes 32 durch ein parallel zur Walze angeordnetes Gegenstück 33,34, insbesondere eine Zerkleinerungsverstellklappe 33 bzw. eine Zerkleinerungsleiste 34, vorgenommen werden kann (Fig. 36, Fig. 37). Je nachdem wie weit der Eintrittsspalt 32 durch die Zerkleinerungsverstellklappe 33 bzw. die Gegenleiste 34 verengt wird, entscheidet sich, wie fein das abgemähte Schnittgut zerteilt wird. Eingezeichnet in den Fig. 36 und 37 ist jeweils die weitest geöffnete Stellung 33a,34a und die weitest geschlossene Stellung 33b,34b der Zerkleinerungsverstellklappe 33 bzw. der Gegenleiste 34. Je weiter der Eintrittsspalt 32 verengt wird, desto feiner wird das abgetragene Gut zerkleinert, bis hin zu einem Vermulchen, so daß es direkt wieder auf Anpflanzungsbereiche aufgebracht werden kann. Je feiner der Eintrittsspalt 32 wird, desto geringer ist allerdings auch die Arbeitsgeschwindigkeit des Mähgerätes, so daß bei einem nicht erforderlichen Vermulchen des abgeschnittenen Halmgutes eine möglichst weite Öffnung des Eintrittsspaltes 32 angestrebt wird, um die erhöhte Effizienz der erfindungsgemäßen Anordnung voll nutzen zu können.

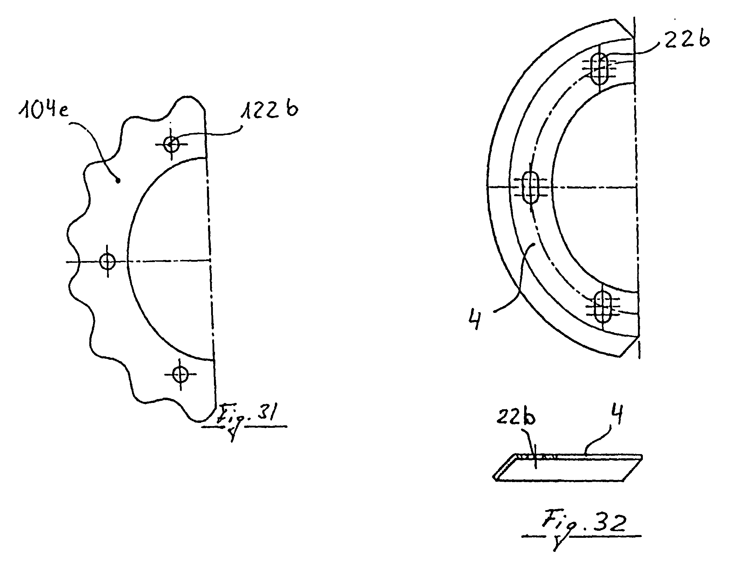

Je nach Anforderung sind die Schneidstücke 4,4a,4b,4c,104,104a,104b, 104c,104d,104e,104f ausgebildet: sie können, wie in den Figuren 26 bis 31 dargestellt, als glatte Ringsegmente ausgebildet sein, deren äußerer Rand entweder glatt sein kann oder eine in verschiedenen Feinheiten gezackte Kontur aufweisen kann (Fig. 27 bis Fig. 29) oder gewellt ist (Fig. 30, Fig. 31).

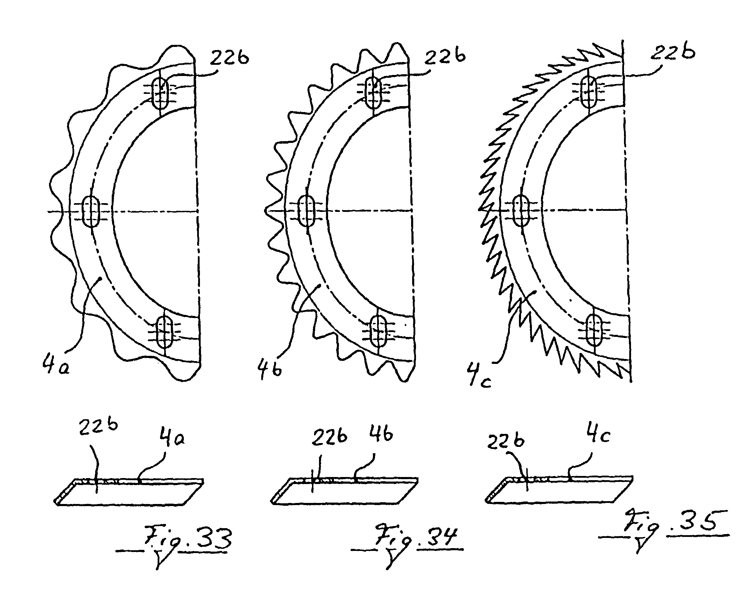

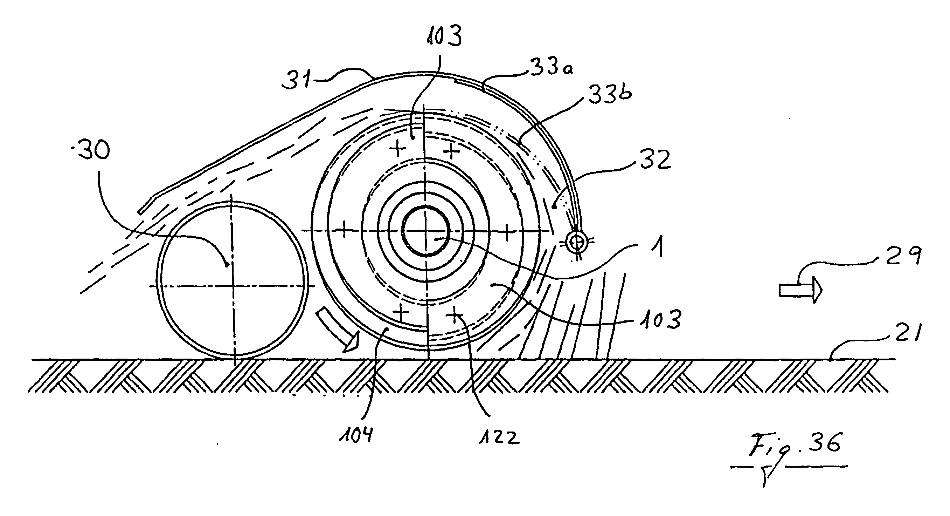

Wie in den Fig. 32 bis 35 dargestellt ist, kann der äußere Rand der Schneidstücke 4,4a,4b,4c bzw. 104,104a,104b,104c,104d,104e,104f auch seitwärts abgekantet sein, ebenfalls wieder mit den verschiedensten Ausprägungen eines glatten 4a, welligen 104e, gezackten 4b bzw. sägezahnartig 4c, 104f geformten Profils.

## Patentansprüche

1. Mähgerät mit zumindest einer im Betrieb rotierenden Walze (1), die an ihrem Umfang mit schräg zur Drehachse (2) angeordneten Tragkörpern (3;103) versehen ist, die jeweils zumindest bereichsweise eine elliptische Umfangsgestalt aufweisen und ihrerseits am Außenbereich mit lösbar befestigten, auswechselbaren Schneidstücken (4,4a,4b,4c;104,104a,104b,104c,104d,104e,104f) besetzt sind, wobei die Projektion der Außenkante der Schneidstücke (4,4a,4b,4c;104,104a, 104b,104c,104d,104e,104f) in Richtung parallel zur Drehachse (2) während des Betriebes eine Kreisbahn beschreibt und die Tragkörper (3;103) jeweils auf ihrer Vorder- (12;112) und Rückseite (13;113) mit Schneidstücken (4,4a,4b,4c; 104,104a, 104b,104c, 104d,104e,104f) versehen sind, die sich jeweils über Teilsegmente (14,15;114,115) des Außenbereichs der Tragkörper (3;103) erstrecken, **dadurch gekennzeichnet, daß** die Tragkörper umlaufend vollständig mit Schneidstücken besetzt sind, und die an den Tragkörpern (3;103) vorderseitig (12;112) und rückseitig (13;113) angebrachten Schneidstücke (4,4a,4b,4c;104,104a,104b, 104c,104d,104e,104f) gegeneinander in einem Höhenversatz bezüglich der Tragkörper (3;103) angeordnet sind.

2. Mähgerät nach Anspruch 1, **dadurch gekennzeichnet, daß** die Tragkörper (3;103) als jeweils einstückige und zumindest bereichsweise (14,114; 15,115) eine elliptische Umfangsgestalt aufweisende Ringscheibenkörper ausgebildet sind, die die Drehachse (2) der Walze (1) umgreifen, wobei jeweils die Vorder- (12;112) und die Rückseite (13;113) eines Ringscheibenkörpers (3;103) in spitzem (17,19;117,119) und in stumpfem Winkel (18,20;118,120) zur Drehachse (2) stehende Flächensektoren aufweist.

3. Mähgerät nach einem der Ansprüche 1 oder 2, **dadurch gekennzeichnet ,daß** an einem Tragkörper (3;103) jeweils zwei gleiche Schneidstücke (4,4a,4b,4c;104, 104a, 1 04b, 1 04c, 104d,104e,104f) angeordnet sind.

4. Mähgerät nach einem der Ansprüche 1 bis 3, **dadurch gekennzeichnet, daß** ein an einem in spitzem Winkel zur Drehachse (2) stehenden Flächensektor (17,19;117,119) angeordneter Schneidkörper (4,4a,4b,4c; 104,104a,1 04b, 1 04c, 104d,104e,104f) oder Teil eines Schneidkörpers (4,4a,4b,4c; 104,104a,104b,104c, 104d, 104e,104f) gegenüber einem an einem in stumpfem Winkel zur Drehachse (2) stehenden Flächensektor (18,20; 118,120) angeordneten Schneidkörper (4,4a,4b, 4c;104,104a,104b,104c,104d, 104e,104f) oder Teil eines Schneidkörpers (4,4a,4b, 4c; 1 04, 1 04a, 1 04b, 1 04c, 104d, 104e,104f) entlang der großen Halbachse (11; 111) der von dem Tragkörper (3;103) gebildeten Ellipse nach außen versetzt ist.

5. Mähgerät nach Anspruch 4, **dadurch gekennzeichnet, daß** die Schneidstücke (4,4a,4b,4c;104,104a,104b,104c,104d,104e,104f) soweit gegeneinander versetzt sind, daß deren Außenumfang jederzeit einen gleichen Abstand von einer parallel zur Drehachse (2) liegenden Bodenebene (21) aufweist.

6. Mähgerät nach einem der Ansprüche 2 bis 5, **dadurch gekennzeichnet, daß** zur Bewirkung der Parallelverschiebbarkeit an dem Tragkörper (3) und/oder den Schneidstücken (4,4a,4b,4c) Langlöcher (22a,22b) angeordnet sind, die eine Relatiwerschiebung zwischen Schneidstück (4,4a,4b,4c) und Tragkörper (3) ermöglichen, wobei zur Fixierung einer eingestellten Relativlage der Teile zueinander Befestigungsmittel vorgesehen sind, die die Langlöcher (22a,22b) durchgreifen.

7. Mähgerät nach einem der Ansprüche 1 bis 6, **dadurch gekennzeichnet, daß** der Tragkörper (103) zwei im wesentlichen halbelliptische gleiche Ringsegmente (114,115) ausbildet, deren Außenumrißgestalt (123) einen Parallelversatz (124) entlang der großen Halbachse (111) der von dem Tragkörper (103) gebildeten Ellipse gegeneinander aufweist.

8. Mähgerät nach Anspruch 7, **dadurch gekennzeichnet, daß** der Ringscheibenkörper (103) einstückig ausgebildet ist und in Abweichung von seiner Außenumrißgestalt (123) einen geschlossenen elliptischen Innenumriß (108) aufweist.

9. Mähgerät nach einem der Ansprüche 7 oder 8, **dadurch gekennzeichnet, daß** über den Umfang der Ringsegmente (114,115) verteilt Bohrungen (122a) zur Aufnahme der Befestigungsmittel angeordnet sind, wobei die Anordnung der Bohrungen (122a) dem Versatz (124) der Halbellipsen (114,115) gegeneinander folgt.

10. Mähgerät nach Anspruch 9, **dadurch gekennzeichnet, daß** die Bohrungen (122a,122b) in den Ringsegmenten (114;115) und in den Schneidstücken (104,104a,104b,104c,104d,104e,104f) als dem Maß des Befestigungsmittels entsprechende Rundbohrungen ausgebildet sind.

11. Mähgerät nach einem der Ansprüche 6 bis 10, **dadurch gekennzeichnet, daß** jedes Ringsegment (14,15;114,115) mit jeweils einem Schneidstück (4,4a,4b,4c;104, 104a,104b,104c,104d,104e,104f) versehen ist.

12. Mähgerät nach einem der Ansprüche 6 bis 11, **dadurch gekennzeichnet, daß** die Schneidstücke (4,4a,4b,4c;104,104a,104b,104c,104d,104e,104f) untereinander identische Form aufweisen.

13. Mähgerät nach einem der Ansprüche 1 bis 12, **dadurch gekennzeichnet, daß** die Walze (1) in einem Gehäuseteil (31) angeordnet ist, wobei sich zwischen dem Gehäuseteil (31) und der Walze (1) ein Eintrittsspalt (32), dessen Breite variabel ist, für das Schnittgut befindet.

14. Mähgerät nach Anspruch 13, **dadurch gekennzeichnet, daß** zur Variation der Breite des Eintrittsspaltes (32) am Gehäuseteil (31) zumindest ein verstellbar angeordnetes und in den Eintrittsspalt (32) hineinragendes Gegenstück (33;34) vorgesehen ist.

## Claims

1. Mowing device having at least one shaft (1), which shaft (1) rotates in operation and is provided at its circumference with supporting bodies (3; 103) arranged obliquely to the axis of rotation (2) which each have, at least in regions, an elliptical circumferential configuration and which in tum are occupied, in the outer region, by detachably fastened, replaceable cutting members (4, 4a, 4b, 4c; 104, 104a, 104b, 104c, 104d, 104e, 104f), in which case the outer edge of the cutting members (4, 4a, 4b, 4c; 104, 104a, 104b, 104c, 104d, 104e, 104f), when projected in a direction parallel to the axis of rotation (2), describes a circular path during operation and the supporting bodies (3; 103) are each provided on their front (12; 112) and rear (13; 113) sides with cutting members (4, 4a, 4b, 4c; 104, 104a, 104b, 104c, 104d, 104e, 104f) which each extend over part-sectors (14, 15; 114, 115) of the outer region of the supporting bodies (3; 103), **characterised in that** the supporting bodies are completely occupied circumferentially by cutting members and the cutting members (4, 4a, 4b, 4c; 104, 104a, 104b, 104c, 104d, 104e, 104f) which are mounted on the front side (12; 112) and rear side (13; 113) of the supporting bodies (3; 103) are arranged to be offset from one another heightwise in relation to the supporting bodies (3; 103).

2. Mowing device according to claim 1, **characterised in that** the supporting bodies (3; 103) are each in the form of one-piece annular-disc bodies of which at least parts (14, 114; 15, 115) are of elliptical circumferential configuration and which fit round the axis of rotation (2) of the shaft (1), the front (12; 112) and the rear (13; 113) sides of an annular-disc body (3; 103) having sectors of their faces which are at an acute (17, 19; 117, 119) and an obtuse (18, 20; 118, 120) angle respectively to the axis of rotation (2).

3. Mowing device according to claim 1 or 2, **characterised in that** two identical cutting members (4, 4a, 4b, 4c; 104, 104a, 104b, 104c, 104d, 104e, 104f) are arranged on a supporting body (3; 103) in each case.

4. Mowing device according to one of claims 1 to 3, **characterised in that** a cutting body (4, 4a, 4b, 4c; 104, 104a, 104b, 104c, 104d, 104e, 104f) or part of a cutting body (4, 4a, 4b, 4c; 104, 104a, 104b, 104c, 104d, 104e, 104f) which is arranged on a face sector (17,19; 117, 119) which is at an acute angle to the axis of rotation (2) is offset outwards along the major semi-axis (11; 111) of the ellipse formed by the supporting body (3; 103), from a cutting body (4, 4a, 4b, 4c; 104, 104a, 104b, 104c, 104d, 104e, 104f) or part of a cutting body (4, 4a, 4b, 4c; 104, 104a, 104b, 104c, 104d, 104e, 104f) which is arranged on a face sector (18, 20; 118, 120) which is at an obtuse angle to the axis of rotation (2)

5. Mowing device according to claim 4, **characterised in that** the cutting members (4, 4a, 4b, 4c; 104, 104a, 104b, 104c, 104d, 104e, 104f) are offset sufficiently far from one another for their outer circumferences to be at all times at the same distance from a ground plane (21) lying parallel to the axis of rotation (2).

6. Mowing device according to one of claims 2 to 5, **characterised in that**, to provide parallel displaceability, elongated holes (22a, 22b) which allow relative movement between a cutting member (4, 4a, 4b, 4c) and a supporting body (3) are provided in the supporting body (3) and/or the cutting members (4, 4a, 4b, 4c), fasteners which pass through the elongated holes (22a, 22b) being provided to allow the parts to be fixed in the relative positions to which they have been set.

7. Mowing device according to one of claims 1 to 6, **characterised in that** the supporting body (103) forms two identical, substantially semi-elliptical annular sectors (114, 115), whose outer outline configurations (123) have a parallel offset (124) from one another along the major semi-axis (111) of the ellipse formed by the supporting body (103).

8. Mowing device according to claim 7, **characterised in that** the annular-disc body (103) is in one piece and, in contrast to the configuration (123) of its outer outline, has a closed, elliptical inner outline (108).

9. Mowing device according to either of claims 7 and 8, **characterised in that** bores (122a) to receive the fasteners are arranged to be distributed circumferentially around the annular sectors (114, 115), the arrangement of the holes (122a) following the offset (124) of the semi-ellipses (114, 115) from one another.

10. Mowing device according to claim 9, **characterised in that** the bores (122a, 122b) in the annular sectors (114; 115) and in the cutting members (4, 4a, 4b, 4c; 104, 104a, 104b, 104c, 104d, 104e, 104f) are in the form of circular bores matching the dimensions of the fastener.

11. Mowing device according to one of claims 6 to 10, **characterised in that** each annular sector (14, 15; 114. 115) is provided with one cutting member (4, 4a, 4b, 4c; 104, 104a, 104b, 104c, 104d, 104e, 104f).

12. Mowing device according to one of claims 6 to 11, **characterised in that** the cutting members (4, 4a, 4b, 4c; 104, 104a; 104b, 104c, 104d, 104e, 104f) are identical in shape to each other.

13. Mowing device according to one of claims 1 to 12, **characterised in that** the shaft (1) is arranged in a housing part (31), there being an entry gap (32) whose width is variable between the housing part (31) and the shaft (1).

14. Mowing device according to claim 13, **characterised in that**, to allow the width of the entry gap (32) to be varied, there is arranged on the housing part (31) at least one companion member (33; 34) which projects into the entry gap (32) and is arranged to be adjustable.

## Revendications

1. Appareil à faucher présentant au moins un cylindre (1) tournant en fonctionnement qui est pourvu sur sa circonférence de corps porteurs (3 ; 103) disposés de façon inclinée par rapport à l'axe de rotation (2) qui présentent chacun au moins par zones une forme de circonférence elliptique et sont de leur côté pourvus sur la zone extérieure de pièces de coupe (4, 4a, 4b, 4c ; 104, 104a, 104b, 104c, 104d, 104e,104f) remplaçables, fixées de façon amovible, la projection du bord extérieur des pièces de coupe (4, 4a, 4b, 4c ; 104, 104a, 104b, 104c, 104d, 104e,104f) dans une direction parallèle à l'axe de rotation (2) décrivant une trajectoire circulaire en fonctionnement et les corps porteurs (3; 103) étant chacun pourvus sur leur face avant (12 ; 112) et leur face arrière (13 ; 113) de pièces de coupe (4, 4a, 4b, 4c ; 104, 104a, 104b, 104c, 104d, 104e,104f) qui s'étendent chacune sur des segments partiels (14, 15 ; 114, 115) de la zone extérieure des corps porteurs (3 ; 103), **caractérisé en ce que** les corps porteurs sont pourvus sur l'entièreté de leur contour de pièces de coupe et **en ce que** les pièces de coupe (4, 4a, 4b, 4c ; 104, 104a, 104b, 104c, 104d, 104e,104f) placées sur la face avant (12;112) et sur la face arrière (13;113) des corps porteurs (3; 103) sont disposées l'une contre l'autre avec un décalage en hauteur par rapport aux corps porteurs (3; 103).

2. Appareil à faucher selon la revendication 1, **caractérisé en ce que** les corps porteurs (3; 103) sont chacun conçus comme des corps à disque annulaires d'une seule pièce et présentant au moins par zones (14, 114 ; 15, 115) une forme de circonférence elliptique qui incluent l'axe de rotation (2) du cylindre (1), la face avant (12;112) et la face arrière (13;113) de chaque corps à disque annulaire (3;103) présentant de secteurs de surface formant un angle aigu (17, 19 ; 117, 119) et un angle obtus (18, 20 ; 118,120) avec l'axe de rotation (2).

3. Appareil à faucher selon l'une quelconque ses revendications 1 ou 2, **caractérisé en ce que** deux pièces de coupe identiques (4, 4a, 4b, 4c ; 104, 104a, 104b, 104c, 104d, 104e, 104f) sont à chaque fois disposées sur un corps porteur (3; 103).

4. Appareil à faucher selon l'une quelconque ses revendications 1 à 3, **caractérisé en ce qu'**un corps de coupe (4, 4a, 4b, 4c ; 104, 104a, 104b, 104c, 104d, 104e, 104f) ou une partie d'un corps de coupe (4, 4a, 4b, 4c ; 104, 104a, 104b, 104c, 104d, 104e, 104f) disposé(e) sur un secteur de surface (17, 19 ; 117, 119) formant un angle aigu avec l'axe de rotation (2) est décalé vers l'extérieur le long du grand demi-axe (11,111) de l'ellipse formée par le corps porteur (3 ; 103), par rapport à un corps de coupe (4, 4a, 4b, 4c ; 104, 104a, 104b, 104c, 104d, 104e, 104f) ou une parie d'un corps de coupe (4, 4a, 4b, 4c ; 104, 104a, 104b, 104c, 104d, 104e, 104f) disposé(e) sur un secteur de surface (18, 20 ; 118,120) formant un angle obtus avec l'axe de rotation (2).

5. Appareil à faucher selon la revendication 4, **caractérisé en ce que** les pièces de coupe (4, 4a, 4b, 4c ; 104, 104a, 104b, 104c, 104d, 104e, 104f) sont suffisamment décalées les unes par rapport aux autres pour que leur circonférence extérieure présente à tout moment une distance identique par rapport à un plan de base (21) situé parallèlement à l'axe de rotation (2).

6. Appareil à faucher selon l'une quelconque ses revendications 2 à 5, **caractérisé en ce que** pour obtenir l'aptitude à coulisser, des trous oblongs (22a, 22b) sont disposés sur le corps porteur (3) et/ou sur les pièces de coupe (4, 4a, 4b, 4c), trous oblongs qui permettent un déplacement relatif entre la pièce de coupe (4, 4a, 4b, 4c) et le corps porteur (3), des moyens de fixation passant à travers les trous oblongs (22a, 22b) étant prévus pour fixer une position relative réglée des pièces l'une par rapport à l'autre.

7. Appareil à faucher selon l'une quelconque ses revendications 1 à 6, **caractérisé en ce que** le corps porteur (103) forme deux segments annulaires identiques essentiellement semi-elliptiques (114, 115), dont la forme de contour extérieur (123) présente un décalage parallèle (124) de l'un par rapport à l'autre le long du grand demi-axe (111) de l'ellipse formée par le corps porteur (103).

8. Appareil à faucher selon la revendication 7, **caractérisé en ce que** le corps à disque annulaire (103) est conformé d'une seule pièce et présente à la différence de sa forme de contour extérieur (123) un contour intérieur elliptique fermé (108).

9. Appareil à faucher selon l'une quelconque ses revendications 7 ou 8, **caractérisé en ce que** des orifices (122a) répartis sur la circonférence des segments annulaires (114, 115) sont disposés pour recevoir les moyens de fixation, la disposition des orifices (122a) suivant le décalage (124) des demi-ellipses (114, 115) l'une par rapport à l'autre.

10. Appareil à faucher selon la revendication 9, **caractérisé en ce que** les orifices (122a, 122b) dans les segments annulaires (114 ; 115) et dans les pièces de coupe (104, 104a, 104b, 104c, 104d, 104e, 104f) sont conformés en tant que des orifices ronds correspondant à la dimension du moyen de fixation.

11. Appareil à faucher selon l'une quelconque ses revendications 6 à 10, **caractérisé en ce que** chaque segment annulaire (14, 15 ; 114, 115) est pourvu à chaque fois d'une pièce de coupe (4, 4a, 4b, 4c ; 104, 104a, 104b, 104c, 104d, 104e, 104f).

12. Appareil à faucher selon l'une quelconque ses revendications 6 à 11, **caractérisé en ce que** les pièces de coupe (4, 4a, 4b, 4c ; 104, 104a, 104b, 104c, 104d, 104e, 104f) présentent les unes par rapport aux autres une forme identique.

13. Appareil à faucher selon l'une quelconque ses revendications 1 à 12, **caractérisé en ce que** le cylindre (1) est disposé dans une pièce formant boîtier (31), une fente d'entrée (32) de largeur variable se trouvant entre la pièce formant boîtier (31) et le cylindre (1) pour le produit coupé.

14. Appareil à faucher selon la revendication 13, **caractérisé en ce que** pour faire varier la largeur de la fente d'entrée (32), il est prévu sur la partie formant boîtier (31) au moins une pièce correspondante (33; 34) disposée de façon à pouvoir être réglée et pénétrant dans la fente d'entrée (32).
